# EUROPEAN PATENT SPECIFICATION

(11) **EP 0 869 845 B1**
(45) Date of publication and mention of the grant of the patent: **27.10.1999**
(21) Application number: 96908090.2
(22) Date of filing: 18.03.1996
(51) Int. Cl.: B01J 38/30, B01J 38/22, B01J 8/10

(54) **PROCESS FOR CATALYST REGENERATION**
VERFAHREN ZUR REGENERATION VON KATALYSATOREN
PROCEDE DE REGENERATION D'UN CATALYSEUR

(30) Priority: 20.03.1995 US 407731
(43) Date of publication of application: 14.10.1998
(73) Proprietor: SHELL INTERNATIONALE RESEARCH MAATSCHAPPIJ B.V., 2596 HR Den Haag (NL)
(72) Inventor: JEAN, Rong-Her, Sugarland, TX 77479 (US); VUITEL, Charles, Arthur, Kingwood, TX 77345 (US)
(86) International application number: PCT/EP96/01206
(87) International publication number: WO 96/29148

(56) References cited:
- WO-A-92/01511
- GB-A- 2 147 518
- US-A- 3 647 714

## Description

This invention relates to a process for regenerating used hydroprocessing catalysts having contaminants comprising carbonaceous and/or sulfur-containing materials deposited on their surface.

A number of catalytic processes are used in the petroleum and petrochemical industries for purposes of treating and converting process streams into a variety of useful products. Among the refining processes utilizing catalysts are cracking, hydrocracking, hydrodesulfurization, hydrodenitrification and reforming. The catalysts used in these processes decline in activity and/or selectivity during the course of use as a result, in major part, of an accumulation of carbonaceous materials commonly containing hydrogen and sulfur on the surface of the catalyst.

Catalysts deactivated by carbonaceous materials deposition can be regenerated by in-situ carbon burn-off in a controlled oxidative atmosphere in a fixed bed apparatus or a fluidized bed apparatus. For example, U.S. Patent No. 4,007,131, discusses a process for regenerating catalyst from hydroprocessing operations by passing hot inert gas containing 0.1-4.0 % volume oxygen through the catalyst while in-situ in the reactor. Such in-situ regeneration, however, requires shutdown of the reactor for the time period needed to perform the regeneration, which may require many days. In addition, some channelling of the hot gas flow in the catalyst bed usually occurs and results in undesired variation in the degree of regeneration obtained. Thus, more effective external catalyst regeneration processes not involving extensive reactor downtime have been sought. However, available external type commercial catalyst regeneration processes have not been entirely satisfactory due to lack of total control over gas temperatures, oxidative atmospheres and physical breakage. Catalysts regenerated by these processes often have incomplete recovery of surface area and pore volume, a high content of residual sulphur and carbon, and substantial fines losses. This situation arises because heat is necessary to remove contaminants, yet excessive heat causes collapse of pore structure, loss of surface area and agglomeration of metals. Release of contaminants from deep in the catalyst pores often requires a long "heat soak" period in order to achieve high removals. Accomplishing the conflicting objectives of surface area retention, which suggests controlled heat for a short time, and complete removal of carbon, which suggests longer heating times, has long been an elusive goal. Thus, it would be advantageous to have a catalyst regeneration process whereby the recovery of catalytic and physical properties as well as the levels of contaminant removal are enhanced.

US-A 4,621,069 discloses the continuous regeneration of used catalyst containing carbon and sulphur in a multiple stage process. The first preparatory stage consists of stripping the particulate catalyst with hot inert gas for 1-2 hours to evaporate low boiling liquid components and the second through the fourth substantive stages consist of burning the oil-free catalyst with (per stage) increasing concentrations of oxygen at increasing temperatures and for an increasing duration of time (i.e. 4-6 hours, 4-6 hours and 6-10 hours respectively). The stripping stage may be conducted in a fluidised bed, and the burning stages may be conducted in a moving belt.

US-A-3,647,714 discloses a process for reducing the carbon content of spent silica-alumina or zeolite catalyst from at least 0.5 wt% to less than 0.25 wt% by burning in a catalyst regenerator chamber, whereby the residence time of the catalyst in the regenerator chamber is reduced to not more than 15 minutes by keeping the temperature in the regenerator chamber at at least 660 °C (1220 °F) and by introducing 10 to 100 percent of the combustion air to the transfer line leading the catalyst to be regenerated into the regenerator chamber, wherein the velocity in the transfer line reaches 6.10 to 18.29 m (20 to 60 feet) per second. The catalyst is fluidised in the transfer line as well as in the regeneration chamber.

WO-A-9201511 discloses a process for regenerating spent fluidised bed cracking catalyst in a fluidised catalytic cracking regenerator with a CO combustion promoter [such as Pt], characterised by regenerating the spent catalyst in at least two stages under controlled conditions, whereby hot regenerated catalyst containing the CO combustion promoter is recycled from the second stage to the first stage and at least 90% CO combustion is maintained in both stages.

None of the above documents addresses the problem of preserving the physical properties of the spent catalysts during their regeneration.

It has now been found that a process for regenerating catalysts which comprises subjecting a spent catalyst to a fluidized bed treatment step followed by a moving belt treatment step results in a regenerated catalyst from which the contaminants have been removed and the physical properties of the catalyst have been substantially recovered and/or enhanced.

The present invention, accordingly, relates to a process for regenerating used catalyst particles contaminated with carbonaceous and/or sulphur-containing materials, which process comprises the steps of:
a) contacting said particles in a fluidised bed with an oxygen-containing gas at a temperature in the range of from 204 °C (400 °F) to 593 °C (1100 °F) and for a time which does not exceed 20 minutes wherein at least part of the contaminants is removed; and
b) passing the thus treated catalyst particles to a moving belt and causing the belt to move said catalyst particles through a furnace zone which is maintained at a temperature in the range of from 371 °C (700 °F) to 593 °C (1100 °F) for at least two hours, wherein the remaining portion of the contaminants is removed.

The present process provides a process in which a used hydroprocessing catalyst deactivated by contamination with carbonaceous materials and sulphur-containing compounds, normally by deposition of such contaminants on the surface of the catalyst particles or by plugging of the catalyst pores by such contaminants, is regenerated by a two step process. The first step of the regeneration process is a fluidized bed treatment, and the second step is a moving belt treatment. A combination of these steps results in regenerated catalysts which show low attrition, i.e., little or no reduction in size of the particles. In some cases, enhanced surface areas can also be seen. In addition, in the process of the present invention, the throughput may be doubled and the end result is a much more optimal regeneration process.

The regeneration process of the present invention is particularly suitable for regenerating hydroprocessing catalysts, especially hydrotreating catalysts. These catalysts typically comprise Group VIB, VIIB, VIII metals, or mixtures of two or more of these metals supported on various supports such as, for example, alumina, silica, silica-alumina, aluminosilicates, zeolites, and the like. The catalysts typically have a cylindrical, spherical or multi-lobe shape, a diameter ranging from 0.50 millimeters to 3.5 milli-meters, and a length between 1.5 millimeters and 6.5 millimeters.

The first step of the regeneration process of the present invention is a fluidized bed treatment. Briefly, a fluidized bed consists of a mass of particles contained in a chamber through which a gas is passed. The particles are typically heated and if the velocity of the gas entering the chamber is properly adjusted, the particles separate and move about in a random manner such that the entire bed behaves like a liquid.

In the present invention, the spent catalyst is placed in a fluidized bed apparatus or chamber of any suitable construction and is supported on a bottom plate or other suitable device having a plurality of ports designed to permit flow of an oxygen-containing gas upwardly and to prevent the catalyst particles from moving downwardly such that the flow of gas would be restricted. The oxygen-containing gas is normally introduced into the chamber prior to the introduction of material to be treated. The oxygen content of the gas can vary in the range of from 4 percent by volume to 100 percent by volume. Preferably, the oxygen component of the gas stream is from 4 to 30 percent by volume, and more preferably from 15 to 22 percent by volume. A convenient gas stream is atmospheric air, although pure oxygen may also be utilized. After the oxygen-containing gas is passed upwardly through the ports into the chamber and contacted with the spent catalyst particles, the exhaust gas exits the chamber and suitably is subjected to a further treatment, such as, for example, it may be passed to equipment downstream for discharge by procedures well known in the art.

The velocity of the gas stream must be sufficiently high for the catalyst particles to remain in fluidized state in the chamber. The minimum velocity is that needed to overcome the gravitational pull on the catalyst particles. The velocity may not be so high that catalyst particles are transported out of the chamber. The oxygen-containing gas is preferably introduced into the chamber at a superficial velocity in the range of from 12.2 meters per minute (m/min) (40 feet per minute (ft/min)) to 488 m/min (1600 ft/min).

Generally, the oxygen-containing gas is introduced into the chamber at a temperature sufficient to initiate the desired reaction in the column, and is desirable that the temperature of the gas stream in the chamber be maintained constant at the temperature it was introduced. Therefore, the temperature of the gas at the inlet is adjusted so that the temperature of the chamber is maintained at the desired temperature, i.e., a temperature in the range of from 204 °C (400 °F) to 593 °C (1100 °F), preferably from 399 °C (750 °F) to 538 °C (1000 °F). The pressure in the chamber is typically atmospheric pressure.

After the gaseous atmosphere has been established at the desired temperature and velocity, the spent catalyst materials are added to the chamber. The residence time of the catalyst particles in the fluidised bed apparatus or chamber is suitably from 1 minute to 20 minutes, preferably from 5 minutes to 15 minutes. These residence times at the temperatures specified above suitably result in the removal from the spent catalyst of at least 50 percent by weight of the sulfur contaminants. The first step, i.e., the fluidized bed step, of the regeneration process also suitably results in the removal of from 5 percent by weight to 40 percent by weight of the carbon contaminants and from 25 percent by weight to 50 percent by weight of the total volatilities present on the spent catalyst. Preferably, at least 55 percent by weight of the sulfur contaminants, and from 10 percent by weight to 25 percent by weight of the carbon contaminants, and from 30 percent by weight to 40 percent by weight of the total volatilities present on the spent catalyst are removed during the fluidized bed treatment. As one skilled in the art would readily recognize, the above-described fluidized bed treatment is quite effective for removing contaminants from used or spent catalysts, but the constant agitation is quite abrasive and thus detrimental to the integrity of the catalysts. Thus, if the catalysts are subjected to such a treatment for prolonged periods of time, attrition becomes a significant problem. For this reason, the present invention is a process in which the most volatile portion of the contaminants are removed in a first step to control the exotherm, i.e., a fluidized bed treatment, and the remainder of the contaminants are removed in a second step, i.e., a moving belt treatment, in which there is a minimal amount of catalyst particle motion.

Following the fluidized bed treatment, the spent or used catalyst is subjected to a moving belt treatment. In this second step of the regeneration process of the present invention, catalyst particles are withdrawn from the fluidized bed apparatus or chamber and transferred to a continuous belt driven by mechanical means such as, for example, a motor and which moves through a furnace zone.

The furnace zone may comprise a single furnace comprising one or more heating zones, but may also comprise two or more distinct furnaces as will be discussed in more detail hereinafter. The belt is advantageously constructed of wire mesh, suitably made of stainless steel, but any other known material capable of being used as a moving belt resistant to high temperatures could also be used. The belt moves in a horizontal direction through a furnace zone such that the catalyst particles are subjected to only a minimal amount of agitation. The catalyst particles will normally be placed onto the belt in the form of a layer or bed, although this is not strictly required. Such bed suitably has a thickness of 0.64 cm (¼ of an inch) to 6.4 cm (2½ inches), preferably from 1.9 cm (3/4 inch) to 3.8 (1½ inches). As the bed containing the catalyst particles is in motion through the furnace zone, hot air, either in the presence or absence of combustion gases is passed through the wire mesh belt. The direction of the air flow may be upwardly or downwardly, as desired, but must flow through the moving belt containing the catalyst particles. The temperature of the air flowing upwardly or downwardly through the moving belt and contacting the catalyst particles should be sufficiently high to achieve the removal of the remaining portion of the contaminants still present on the catalyst particles. It has been found particularly advantageous to increase the temperature as the particles move through the furnace. Very good results are obtained when the temperature of the oxygen-containing gas used -suitably air- increases over a range within the range from about 370 °C (700 °F) to about 595 °C (1100 °F) as the catalyst particles continue on the belt. Accordingly, the temperature in the furnace is suitably maintained in the range of from 371 °C (700 °F) to 593 °C (1100 °F) and preferably from 371 °C (700 °F) to 510 °C (950 °F). The time required for the moving belt treatment and the removal of the remainder of the carbon and sulfur contaminants suitably is at least two hours, and is generally from four hours to eight hours.

In one embodiment of the present invention, the catalyst particles are passed through a furnace zone consisting of a series of zones where the temperatures are controlled in each zone, suitably in such way that the temperature increases in each successive zone. In this embodiment, the zones are distinguished by physical separation means, so basically the furnace consists of a number of smaller furnace zones. The number of zones will normally be less than 8, and suitably is in the range from 3 to 8. However, the number of zones utilized is not critical. In this embodiment, the catalyst residence time in each zone is maintained at the desired time by controlling the belt speed. Initially, the temperature of the oxygen-containing gas in the first zone is 371 °C (700 °F) to 482 °C (900 °F), preferably from 412 °C (775 °F) to 468 °C (875 °F). Following a residence time in each zone of 0.5 hours to 2 hours, the catalyst particles are passed to additional zones in which the temperature of the oxygen-containing gas is increased to 427 °C (800 °F) to 593 °C (1100 °F), preferably from 432 °C (810 °F) to 510 °C (950 °F). The total residence time for the moving belt treatment is suitably again in the range of from two hours to eight hours, although longer residence times may be utilized, if desired. The regenerated catalyst is then withdrawn from the moving belt and passed to a cooling step before packaging and return of the catalyst for reuse.

The regeneration process of the present invention is particularly advantageous from an economic standpoint for continuous operations in that the throughput can be significantly increased.

The process of this invention will be further described by the following embodiments which are provided for illustration and are not to be construed as limiting the invention.

The following Example and Comparative Examples utilized spent/used catalysts having the following characteristics:

| Catalyst Composition | Ni/Mo on Al₂O₃ |
|---|---|
| Carbon, %wt. | 10.3 |
| Sulfur, %wt. | 6.4 |
| Surface area, m²/g.⁽¹⁾ | 230 |
| Attrition Index⁽²⁾ | 53.4 |

| | |
|---|---|
| ⁽¹⁾ Surface area is determined by the B.E.T. method for determining specific surface area as described in Brunauer, S., Emmet, P. Y. and Teller, E., J. Am. Chem. Soc., 60, 309-316 (1938). | |
| ⁽²⁾ Attrition index is defined as the number percent of particles which are less than the averaged length of 2.5 millimeters. | |

### Example 1

Spent catalysts having the above characteristics were regenerated using the process of the present invention. The conditions used were as follows:

The gas atmosphere, i.e., air containing 21 volume percent of oxygen, was entered into a fluidized bed chamber, i.e. pretreater, at a superficial velocity of 131 m/min (430 ft/min) and an initial temperature of 510 °C (950 °F). The fluidized bed chamber had a staggered, perforated type of distributor plate at the bottom, a reaction zone having a 45.7 cm (18 inch) diameter and a height of 160 cm (5 feet, three inches), a transition zone of conical shape having 45° included angles and having a height of 28.6 cm (11.25 inches), and a disengagement zone having a diameter of 91 cm (36 inches) and a height of 91 cm (3 feet). There was a cyclone downstream and a wet scrubber for collecting fine catalyst particles entrained from the fluidized bed chamber and for removing the sulfur dioxide produced in the pretreater.

The spent catalysts, having a trilobe shape averaging 0.13 cm (1/20 inch) in diameter and 2.5 millimeters (mm) in length, were fed continuously from a 7.6 cm (three inch) pipe on one side of the disengagement section. The partially regenerated catalysts were discharged continuously from a 15.2 cm (six inch) pipe on the opposite side of the reaction zone. The catalyst discharge rate was controlled by means of a flapper valve, while the spent catalyst feed rate was controlled using a vibrator connected to a hopper. The bed height of the catalyst in the pretreater was maintained at about 15 cm (six inches).

Initially, 19.5 kg (43 pounds) of regenerated catalysts were charged to the pretreater for facilitating control of the initial reactor temperature. In order to achieve a steady state, prior to the fluidized bed treatment step, the spent catalyst feed rate and the discharge rate were set at 1.0 kg/min (2.2 lb/min). The inlet air temperature was then gradually decreased from 510 °C (950 °F) to 466 °C (870 °F) after 20 minutes of start-up. The feed and discharge rate were then reset to about 2.0 kg/min (4.3 lb/min) (10 minute residence time) and the inlet air temperature was gradually reduced to 293 °C (560 °F). One drum of partially regenerated catalysts was collected at 60 minutes after the start-up. The feed and the discharge rate were then further increased to 2.5 kg/min (5.5 lb/min) (7.8 minute residence time), and the inlet air temperature was maintained at 293 °C (560 °F). Another drum of the partially regenerated catalysts was collected at 120 minutes after the start-up. The catalyst temperature inside the fluidized bed pretreater fluctuated from 393 °C (740 °F) to 416 °C (780 °F) when both drums of catalysts were collected. For the first drum, the sulfur content from this step was 2.6 wt%, i.e., 59 wt% of the sulfur contaminants had been removed, and the carbon content was 8.6 wt%, i.e., 16.5 wt% of the carbon contaminants had been removed. For the second drum, the sulfur content was 2.7 wt%, i.e., 58 wt% of the sulfur contaminants had been removed, and the carbon content was 8.6 wt% i.e., 16.5 wt% of the carbon contaminants had been removed.

The drums of partially regenerated catalysts from the pretreater were then sent to the moving belt for the second step of the regeneration process. The catalyst passed through Zone 1 which had a temperature ranging from 432 °C (810 °F) to 443 °C (830 °F), Zone 2 which had a temperature ranging from 382 °C (720 °F) to 438 °C (820 °F), Zone 3 which had a temperature ranging from 432 °C (810 °F) to 454 °C (850 °F), and Zone 4 which had a temperature ranging from 432 °C (810 °F) to 460 °C (860 °F). The catalyst bed thickness on the belt was maintained at 1.9 cm (3/4 inch) and the belt speed corresponded to a production rate of 3402 kg (7500 pounds) per day.

The results are presented in Table 1 below.

### Comparative Example 1

Spent catalysts having the above characteristics were regenerated using a fluidized bed treatment, but without a subsequent moving belt treatment. The conditions used were as follows:

The catalysts remaining in the pretreater in Example 1 above were gradually heated from a temperature of 393 °C (740 °F) up to a temperature of 482 °C (900 °F) over a period of 75 minutes. The superficial air velocity in the reactor was maintained at about 131 m/min (430 ft/min) during the regeneration process.

The results are presented in Table 1 below.

**TABLE 1**

| | Ex. 1 | Comp. Ex. 1 |
|---|---|---|
| Carbon, %wt. | 0.2 | 0.1 |
| Sulfur, %wt. | 0.3 | 0.5 |
| Surface area, m²/g. ⁽¹⁾ | 229 | 228 |
| Attrition Index ⁽²⁾ | 54.2 | 57.4 |

| | | |
|---|---|---|
| ⁽¹⁾ Surface area determined by the B.E.T. method for determining specific surface area as described in Brunauer, S., Emmet, P. Y. and Teller, E., J. Am. Chem. Soc., 60, 309-316 (1938). | | |
| ⁽²⁾ Attrition index is defined as the number percent of particles which are less than the 2.5 millimeters averaged length. The number percent is 53.4 for spent/used catalysts as indicated in the table above summarizing the characteristics of the spent catalyst. | | |

As can be seen in Table 1, the spent catalyst regenerated according to the present invention (Example 1) has a much lower attrition index than catalysts regenerated using a fluidized bed process alone (Comparative Example 1).

## Claims

1. A process for regenerating used catalyst particles contaminated with carbonaceous and/or sulphur-containing materials, which process comprises the steps of:
a) contacting said particles in a fluidised bed with an oxygen-containing gas at a temperature in the range of from 204 °C (400 °F) to 593 °C (1100 °F) and for a time which does not exceed 20 minutes wherein at least part of the contaminants is removed; and
b) passing the thus treated catalyst particles to a moving belt and causing the belt to move said catalyst particles through a furnace zone which is maintained at a temperature in the range of from 371 °C (700 °F) to 593 °C (1100 °F) for at least two hours, wherein the remaining portion of the contaminants is removed.

2. A process according to claim 1, wherein 5 to 40 percent by weight of the carbon contaminants and/or at least 50 percent by weight of the sulphur contaminants are removed in step a).

3. A process according to claim 1 or 2, wherein said oxygen-containing gas is selected from the group consisting of air, pure oxygen and mixtures thereof.

4. A process according to any one of claims 1 to 3, wherein the furnace zone of step (b) consists of a series of zones wherein the temperature is increased in each successive zone.

5. A process according to claim 4, wherein the number of zones is in the range of from three to eight.

## Patentansprüche

1. Verfahren zum Regenerieren von verbrauchten Katalysatorteilchen, die mit kohlenstoffhältigen und/oder schwefelhältigen Materialien verunreinigt sind, welches Verfahren die folgenden Stufen umfaßt:
a) Inkontaktbringen dieser Teilchen in einem Fließbett mit einem sauerstoffhältigen Gas bei einer Temperatur im Bereich von 204°C (400°F) bis 593°C (1.100°F) und während einer Zeitdauer, die 20 Minuten nicht übersteigt, worin wenigstens ein Teil der Verunreinigungen beseitigt wird, und
b) Verbringen der so behandelten Katalysatorteilchen auf ein Förderband und Bewegen der Katalysatorteilchen mittels des Bandes durch eine Ofenzone, die auf einer Temperatur im Bereich von 371°C (700°F) bis 593°C (1.100°F) gehalten wird, während wenigstens zwei Stunden, worin der restliche Anteil der Verunreinigungen beseitigt wird.

2. Verfahren nach Anspruch 1, worin 5 bis 40 Gew.-% Kohlenstoffverunreinigungen und/oder wenigstens 50 Gew.-% der Schwefelverunreinigungen in Stufe a) beseitigt werden.

3. Verfahren nach Anspruch 1 oder 2, worin das sauerstoffhältige Gas aus der aus Luft, reinem Sauerstoff und deren Gemischen bestehenden Gruppe ausgewählt ist.

4. Verfahren nach einem der Ansprüche 1 bis 3, worin die Ofenzone von Stufe b) aus einer Reihe von Zonen besteht, worin die Temperatur in jeder nachfolgenden Zone erhöht ist.

5. Verfahren nach Anspruch 4, worin die Anzahl der Zonen im Bereich von 3 bis 8 liegt.

## Revendications

1. Procédé de régénération de particules de catalyseur usées contaminées avec des matières carbonées et/ou contenant du soufre, lequel procédé comprend les étapes suivantes :
a) la mise en contact desdites particules dans un lit fluidisé avec un gaz contenant de l'oxygène à une température dans l'intervalle de 204°C (400°F) à 593°C (1100°F) et pendant un temps qui n'excède pas 20 minutes, au cours de laquelle au moins une partie des contaminants est séparée; et
b) le passage des particules de catalyseur ainsi traitées sur une bande mobile et l'entraînement de la bande pour amener lesdites particules de catalyseur à travers une zone de four qui est maintenue à une température dans l'intervalle de 371°C (700°F) à 593°C (1100°F) pendant au moins 2 heures, au cours desquels la partie restante des contaminants est séparée.

2. Procédé suivant la revendication 1, dans lequel 5 à 40 % en poids des contaminants de carbone et/ou au moins 50 % en poids des contaminants de soufre sont séparés dans l'étape a).

3. Procédé suivant l'une ou l'autre des revendications 1 et 2, dans lequel le gaz contenant de l'oxygène est choisi dans le groupe comprenant l'air, l'oxygène pur et leurs mélanges.

4. Procédé suivant l'une quelconque des revendications 1 à 3, dans lequel la zone de four de l'étape (b) se compose d'une série de zones dans lesquelles la température est élevée dans chaque zone successive.

5. Procédé suivant la revendication 4, dans lequel le nombre de zones se situe dans la gamme de trois à huit.
